(19) Europäisches Patentamt
European Patent Office
Office européen des brevets

(11) **EP 3 470 906 A2**

(12) **EUROPÄISCHE PATENTANMELDUNG**

(43) Veröffentlichungstag:
17.04.2019 Patentblatt 2019/16

(51) Int Cl.:
*G02B 21/36* *(2006.01)*  *G02B 21/06* *(2006.01)*
*G02B 21/16* *(2006.01)*

(21) Anmeldenummer: 18188710.0

(22) Anmeldetag: **06.10.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2011 DE 102011115946**
**07.08.2012 DE 102012015861**
**28.09.2012 DE 102012019466**

(62) Dokumentnummer(n) der früheren Anmeldung(en) nach Art. 76 EPÜ:
**12783105.5 / 2 766 765**

(27) Früher eingereichte Anmeldung:
**06.10.2012 PCT/EP2012/004194**

(71) Anmelder: **Carl Zeiss Microscopy GmbH**
**07745 Jena (DE)**

(72) Erfinder:
• **Ritter, Jörg**
**07749 Jena (DE)**
• **Lippert, Helmut**
**07745 Jena (DE)**
• **Kaufhold, Tobias**
**07749 Jena (DE)**

(74) Vertreter: **Loritz, Rainer**
**Carl Zeiss AG**
**Konzernfunktion Recht und Patente**
**Patentabteilung Jena**
**Carl-Zeiss-Promenade 10**
**07745 Jena (DE)**

Bemerkungen:
Diese Anmeldung ist am 13.08.2018 als Teilanmeldung zu der unter INID-Code 62 erwähnten Anmeldung eingereicht worden.

(54) **MIKROSKOP UND VERFAHREN ZUR SPIM-MIKROSKOPIE**

(57) Verfahren zur SPIM-Mikroskopie, wobei die Probe kontinuierlich mit vorzugsweise konstanter Geschwindigkeit durch das Lichtblatt verfahren wird und mittels einer Detektierungseinrichtung während des Verfahrens mehrere Bilder in zeitlichen, vorzugsweise periodischen Abständen aufgenommen werden,
wobei vorteilhaft
die Bildaufnahmedauer oder Belichtungszeit so bemessen ist dass der Verfahrweg der Probe innerhalb eines vorgegebenen Auflösungsbereiches des Detektionsdetektives liegt,
die Geschwindigkeit des Verfahrens der Probe durch die verwendete Bildaufnahmedauer oder Belichtungszeit ermittelt und eingestellt wird.
und/ oder die durch das Verfahren der Probe erzeugte Verzerrung der Punktabbildungsfunktion (PSF), die Bildunschärfe, mittels der jeweiligen Bildaufnahmedauer und der Verfahrgeschwindigkeit rechnerisch korrigiert wird und dadurch ein scharfes Bild erzeugt wird.

Fig.1

EP 3 470 906 A2

**Beschreibung**

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs bzw. in einer definierten Ebene in der Nähe der dieser Fokusebene umfasst. Die Mittel zur Beleuchtung umfassen eine vorzugsweise kohärentes Licht abstrahlende Beleuchtungsquelle.

Ein Mikroskop, bei dem Beleuchtungsstrahlengang und Detektionsstrahlengang im Wesentlichen senkrecht zueinander angeordnet sind, und bei der die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der Selective-Plane-Illumination-Microscopy (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im Wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit ebenfalls die Form eines SPIM - Lichtblatts.

Die SPIM-Technologie ist beispielsweise beschrieben in Stelzer et al., Optics Letters 31, 1477 (2006), in Stelzer et al., Science 305, 1007 (2004), in der DE 102 57 423 A1 und in der WO2004/0530558 A1.

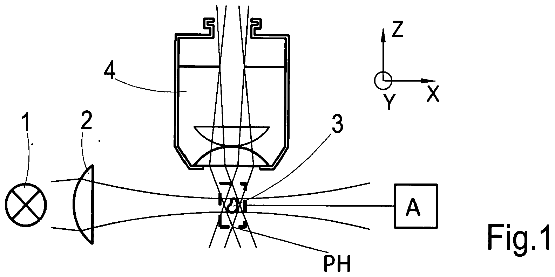

In Fig.1 ist zunächst der grundsätzliche Aufbau eines SPIM-Mikroskops dargestellt. Das Licht einer Beleuchtungsquelle 1 wird über eine Beleuchtungsoptik 2 zu einem Lichtblatt geformt und auf eine Probe 3 gelenkt. Probe und Lichtblatt befinden sich in der Fokusebene eines Abbildungsobjektivs 4. Die optische Achse des Abbildungsobjektivs 4 steht senkrecht zu der Richtung, aus der die Probe 3 beleuchtet wird. Die Beleuchtungsoptik 2 umfasst in der Regel mehrere optische Elemente, die das kohärente Licht der Beleuchtungsquelle 1 kollimieren und daraus ein Lichtblatt formen. Im Stand der Technik umfasst die Beleuchtungsoptik 2 in der Regel auch eine Zylinderlinse, deren flache Seite zur Probe weist und deren gewölbte Seite in Richtung der Beleuchtungsquelle weist. Schematisch ist eine Probenhalterung PH dargestellt mittels derer die Probe, beispielsweise über eine Ansteuereinheit A gesteuert, motorisch in Richtung der optischen Achse des Objektives 4 bewegt wird.

Die beschriebene "Lichtscheibenmikroskopie" (Light sheet microscopy) kombiniert optische Schnitte mit einer Weitfeld-Detektion über eine ortsauflösende Kamera (CCD Kamera), indem die komplette laterale fokale Ebene (xy-Ebene) des Detektionsobjektives mit einem dünnen Lichtblatt beleuchtet wird (Abbildung 1). Die Lichtblattbeleuchtung erfolgt rechtwinklig zur Detektionsachse (z-Achse).

Die Probe wird in dem überlappenden Bereich von Beleuchtung und Detektion platziert. Fluoreszenzsignale, die durch das Beleuchtungslichtblatt angeregt wird, werden über das gesamte Gesichtsfeld des Detektionsobjektivs auf die Kamera abgebildet. Durch die rechtwinklige Beleuchtung mit einem dünnen Lichtblatt wird nur ein kleiner Teil der axialen Ausdehnung der Detektionsoptik beleucht und somit ein optischer Schnitt erzeugt. Um einen anderen Bereich in der Probe zu beobachten wird die Probe, unabhängig von der Optik, mit einer Probenpositioniereinheit durch das Lichtblatt gefahren. Durch das Aufnehmen optischer Schnitte an verschiedenen Probenpositionen entlang der Detektionsachse ist Aufnahme von dreidimensionalen Bildstapeln möglich. Diese Bildstapel können anschließend zu einem 3D-Bild rekonstruiert werden.

Dazu ist die Aufnahme mehrerer dreidimensionaler Bildstapel aus verschiedenen Winkeln notwendig. Ein Bildstapel umfasst beispielsweise 200 Bilder. Es werden mindestens vier unterschiedliche Bestrahlungswinkel Winkel benötigt für ein dreidimensionales Bild.

Ein typisches Experiment in der Lichtscheibenmikroskopie ist die Verfolgung der Entwicklung eines biologischen Organismus und dauert 1-3 Tage, wobei ca. alle 5 Minuten ein 3D-Bild aufgenommen wird. Es werden also ca. 1000-3000 Bildstapel während eines Experiments aufgenommen.

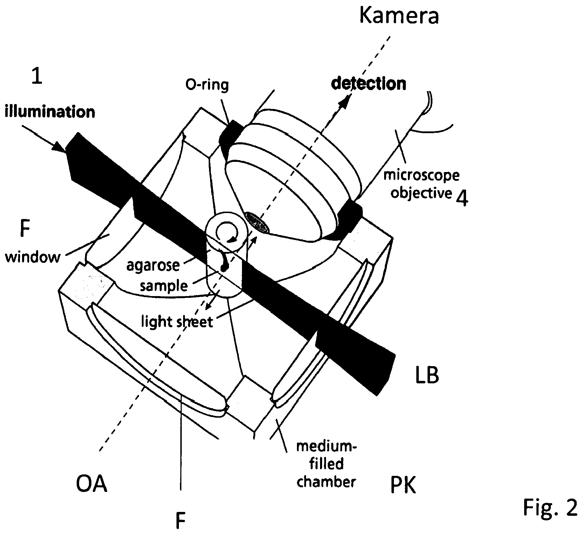

Fig.2 zeigt in Ergänzung zu Abb.1 in Anlehnung an eine Darstellung in Huisken/ Steinier (Development 136, 1963-1975(2009)" Selective plane Illumination microscopy techniques in developmental biology") eine mit einem flüssigen Medium gefüllte Probenkammer PK, die Fenster F aufweist die dem Lichtdurchgang der Probenbeleuchtung 1 mit dem Lichtblatt LB sowie des Detektionslichtes in Richtung des Detektionsobjektives 4 und einer nicht dargestellten Kamera dienen. Die Probe wird in Detektionsrichtuing entlang der optischen Achse OA des Detektionsrichtung wie durch die Pfeile angedeutet, verschoben.

Nach dem genannten Stand der Technik (Huiskens)wird die Probe schrittweise durch das Lichtblatt gefahren.

Erfinderische Lösung

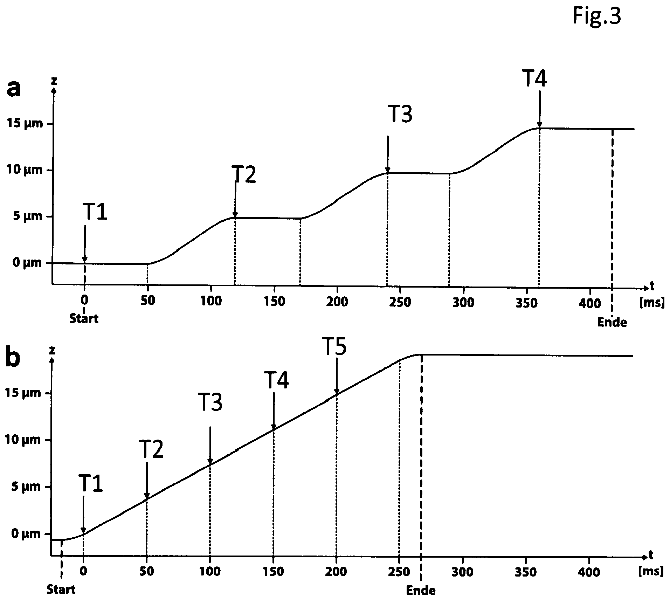

Fig. 3 zeigt einen Vergleich des Schrittbetriebes nach dem Stand der Technik (3a) und dem Verfahren gemäß der Erfindung (3b).

Dargestellt ist jeweils die zurückgelegte Wegstrecke z der Probe nach Beginn der Messung (Start) in $\mu$m in Richtung der optischen Achse des Objektives 4 (vertikale Achse) in Abhängigkeit von der Zeit t in ms bis zum Ende der Messung.

Die Punkte T1-4 kennzeichnen jeweils einen Aufnahmezeitpunkt der Detektionseinrichtung, vorzugsweise einer Kamera.

Konkret für jeden Schritt bedeutet das (Fig.2a):

- Die Probe wird beschleunigt (ca. 10 ms)
- Einen feste Strecke wird verfahren
- Die Probe muss wieder abgebremst werden (ca. 10 ms)
- Es wird eine Zeit gewartet bis die Probe wieder in Ruhe ist (Schwingungen angeregt durch die Bremsbeschleunigung) (ca. 50 ms)
- Die Bildaufnahme (T1-T4) wird jeweils gestartet (Dauer ca. 50 ms)
- Nach der Bildaufnahme wir die Probe wieder beschleunigt usw.

Dieses schrittweise Verfahren ist sehr langwierig, da die Probe immer wieder neu beschleunigt und abgebremst wird. Bei 1000 Bildstapeln mit je 200 Bildern während eines Experiments, wird die Probe ca. 200.000-mal schrittweise verfahren.

Effektiver und schneller ist es die Probe kontinuierlich mit konstanter Geschwindigkeit durch das Lichtblatt zu verfahren und die Bilder in zeitlich periodischen Abständen aufzunehmen (Fig.2b).

Beim diesem kontinuierlichen Verfahren fallen Beschleunigungs-, Verfahr- und Ruhezeiten weg (ca. 70 ms). Die Pfeile T1-T5 zeigen jeweils den Start einer neuen Bildaufnahme an, die grauen Flächen repräsentieren die Belichtungszeit.

Durch die Bildaufnahme beim kontinuierlichen Verfahren ist es bei typischen Belichtungszeiten von 50 ms möglich die Zeit zur Aufnahme eines Bildstapels um ca. 40 % zu reduzieren. Gleichzeitig ist die zeitliche Auflösung erhöht, da es möglich ist schneller Bilder hintereinander aufzunehmen.

Es wird die Wartezeit gespart bis die Probe in Ruhe ist und die Beschleunigung der Probe muss nur einmalig am Anfang erfolgen. Betrachtet man die typischen Werte für das schrittweise Verfahren, so kann man ca. 70 ms bei jedem Schritt einsparen. Zum Vergleich beträgt die typische Aufnahmezeit eines Bildes 50 ms! Dementsprechend können ganze Bildstapel wesentlich schneller aufgenommen werden. Gleichzeitig können durch diese Methode mehr Bildstapel in derselben Zeit aufgenommen werden und man erhält somit eine höhere zeitliche Auflösung in seinem Experiment.

Vorraussetzung für ein erfolgreiches Anwenden des Verfahrens ist eine Probenpositioniereinheit, die ein kontinuierliches Verfahren mit extrem konstanter Geschwindigkeit ermöglicht. Ansonsten ist eine nachträgliche, räumliche Zuordnung der Bilder nicht mehr möglich.

Die Probe wird auch während der Belichtungszeit der Kamera verfahren, d.h. die Probe darf in diesem Zeitraum die axiale Auflösung (ca. 1 $\mu$m) des Detektionsobjektivs nicht verlassen, ansonsten ist eine Bewegungsunschärfe auf der Kamera zu sehen. Will man die Bildstapel zu einem 3D-Bild verrechnen muss zusätzlich ein genügend großer Bildüberlapp zwischen zwei benachbarten Bildern gewährleistet sein, ansonsten scheitert die Verrechnung. Aus diesen Gründen muss die Probe sehr langsam verfahren werden. Typische Verfahrgeschwindigkeiten sind 1 - 500 $\mu$m/s, abhängig von der axialen Auflösung und der Belichtungszeit der Kamera.

Bei diesen Verfahrgeschwindigkeiten darf die Probe während ihres kontinuierlichen Verfahrens nicht weiter als 2 $\mu$m von Ihrer Soll-Position entfernt sein. Dieser Parameter wird als Dynamischer Schleppfehler bezeichnet. Den dynamischen Schleppfehler einzuhalten ist um so schwieriger, desto langsamer die Verfahrgeschwindigkeit ist, da Reibungskräfte einen stärkeren Einfluss haben. Eine optische oder elektronische Wegmessung während des konstanten Verfahrens ist daher erforderlich.

Zusätzlich zu dem Verfahren konstanter Geschwindigkeit kann auch während des kontinuierlichen Verfahrens in periodischen Abständen die Position sehr genau gemessen werden (Messgenauigkeit < 5 nm). Durch eine anschließende Software - Korrektur der einzelnen Bilder können so auch kleinste Skalierungsfehler in axialer Richtung korrigiert werden. Will man Bildstapel mit Deconvolution-Algorithmen verrechnen muss nach wie vor ca. 50% Bildüberlapp zwischen zwei axial benachbarten Bildern vorhanden sein. Ist die Verrechnung der Bildstapel nicht notwendig, sondern nur eine korrekte Skalierung von Bedeutung, so reicht es aus die Position während des Verfahrens zu messen und eine extrem konstante Verfahrgeschwindigkeit ist nicht mehr notwendig.

Von Vorteil für ein erfolgreiches Anwenden des erfindungsgemässen Verfahrens ist ein hochgenaues Positionieren der Probe. Typischerweise wird eine Positioniergenauigkeit von < 1 μm mit einer Reproduzierbarkeit < 200 nm (1□) benötigt.

Dies gewährleistet, dass die konstante Geschwindigkeit nach einer festen Verfahrstrecke und Verfahrzeit erreicht wird. Somit startet der Bildstapel an der gewünschten Stelle, und es kommt zu keiner Verschiebung des Bildstapels. Des Weiteren ist damit auch gewährleistet, dass bei wiederholtem Aufnehmen desselben Bildstapels immer die gleiche Startposition angefahren wird.

Von Vorteil ist auch ein getriggertes Starten und Stoppen des Verfahrens, um so weitere Kommunikationszeit zwischen Elektronik und PC einzusparen (ca. 100ms pro Befehl). Ohne getriggertes Verfahren verlängert sich die Aufnahmezeit bei schrittweisem Verfahren noch zusätzlich um die Kommunikationszeit pro Schritt.

Durch die Bildaufnahme bei kontinuierlichen Verfahren der Probe kann es zu einer Bewegungsunschärfe kommen. Diese Unschärfe ist abhängig von der Belichtungszeit und der Verfahrgeschwindigkeit. Durch einen zusätzlichen Rechenschritt nach der Aufnahme kann dieser Effekt minimiert werden. Die Punktabbildungsfunktion (Point spread function = PSF) wird durch die Bewegung der Probe vorhersagbar verzerrt. Sind Belichtungszeit und Verfahrgeschwindigkeit bekannt, kann die reale PSF berechnet werden und die Bilder mit berechneten PSF entfaltet werden. Diese "Bewegungs-Dekonvolution" entspricht einem (/mathematischen) Schärfe-Filter für diese Anwendung.

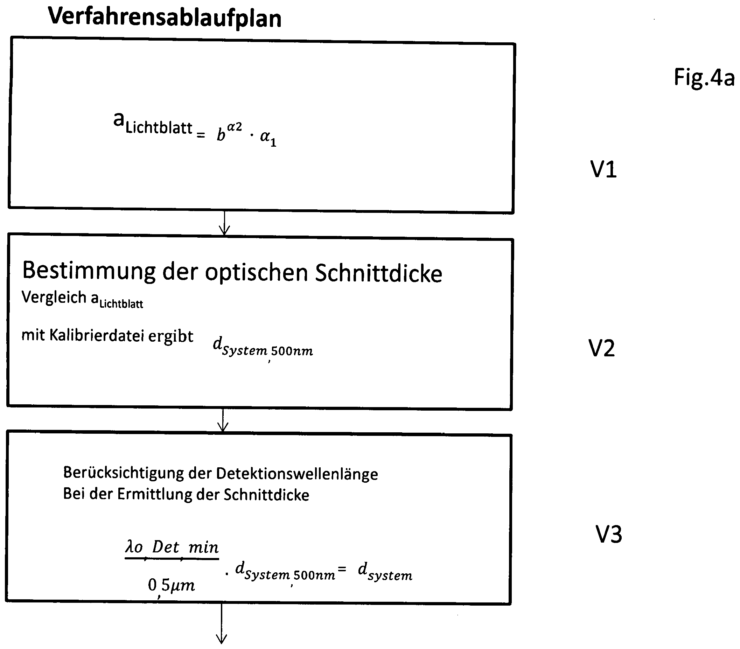

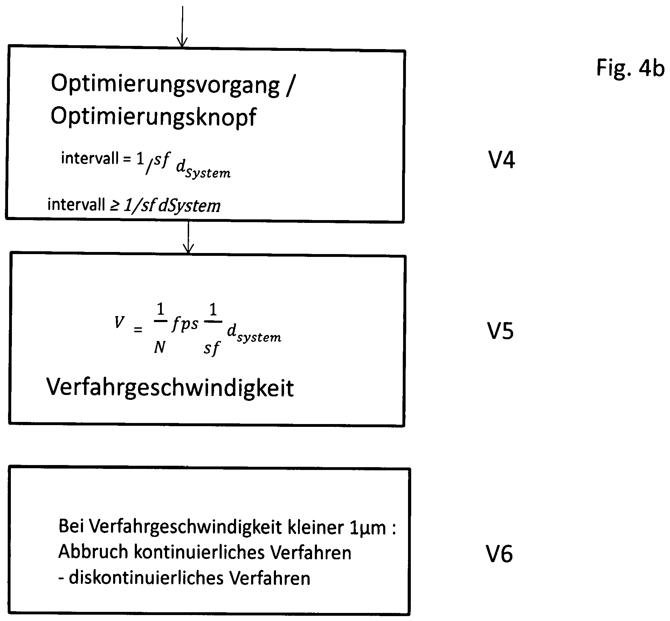

In der Fig.4a/b ist ein Verfahren mit Verfahrensschritten V1-V6 zur Berücksichtigung der tatsächlichen und danach der effektiven, d.h. praktischen Lichtblattdicke bei dem oben geschilderten erfindungsgemäßen kontinuierlichen Vortrieb beschreiben sowie ein Abbruchkriterium dass zum Übergang zu einem diskreten Aufnahmeverfahren führt.

Legende der Abkürzungen

| | |
|---|---|
| A Lichtblatt | ist die Lichtblattdicke in μm. Die minimale Lichtblattdicke beträgt derzeit etwa 1-2 Mikrometer |
| $a_1$ , $a_2$ | sind Kalibrierparameter des Beleuchtungsobjektivs. Für jedes Objektiv gibt es einen spezifischen Parametersatz. $a_1$ ist in μm angegeben, $a_2$ Dimensionslos |
| b | bedeutet die Einstellung des Beleuchtungszooms |
| $\lambda\ 0,Det, min$ | ist die Wellenlänge der Detektion in μm. Sie ist in beispielsweise die Wellenlänge der Beleuchtung $\lambda_{0,Bel}$ + 0.01 μm. Das wäre ein typischer Stokes-Shift (Rotverschiebung zwischen Anregung und Detektion) eines Fluoreszenzfarbstoffes. Praktisch kennt man den verwendeten Fluoreszenzfarbstoff und benutzt den korrekten Stokes-Shift für diesen Farbstoff (z.B. aus einer Datenbank). Bei Beleuchtung mit mehreren Wellenlängen wird i.d.R. die kleinste herangezogen. |
| 0.5 μm | Die 0.5 μm entsprechen einer beispielhaften Detektionswellenlänge, die ungefähr in der Mitte des Detektionsspektrums liegt, für die eine theoretische optische Schnittdicke berechnet wurde. |
| Intervall | Das Intervall darf nie kleiner sein als in bei der Optimierung berechnet. |
| sf | ist der Samplingfaktor |
| $d_{System}$ | ist die Optische Schnittdicke des Systems |
| $V_{cont.drive}$ | ist die Verfahrgeschwindigkeit im continuous drive |
| N | ist Anzahl der Bilder, die von einer z-Position aufgenommen werden sollen, beispielsweise 1,2 oder 4. |
| fps | heisst "Effektive frames-per-second" und meint die aufgenommenen Bilder pro Sekunde |

Die folgenden Verfahrensschritte V1-V6 sind im Ablaufplan von Fig. 4a/b dargestellt:

Verfahrensschritt V1:

Berechnung der Lichtblattdicke

$$a_{\text{Lichtblatt}} = b^{\alpha 2} \cdot \alpha_1$$

Verfahrensschritt V2:

Bestimmung der optischen Schnittdicke

Aus $a_{\text{Lichtblatt}}$ wird durch eine Kalibriertabelle $d_{System,500nm}$ ermittelt.

Verfahrensschritt V3:

Berücksichtigung der Detektionswellenlänge

$$\frac{\lambda_{0,Det,min}}{0,5\mu m} \cdot d_{System,500nm} = d_{system}$$

Verfahrensschritt V4:

Optimierungsvorgang

$$\text{intervall} \geq 1/sf\ d_{System}$$

ist die Bedingung (s.u.), in der Regel wird bestimmt:

$$\text{intervall} = 1/sf\ d_{System}$$

Verfahrensschritt V5:

Verfahrgeschwindigkeit:

$$V = \frac{1}{N} fps \frac{1}{sf} d_{system}$$

Verfahrensschritt V6:

Abbruch kontinuierlicher Vortrieb
Bei einer Verfahrgeschwindigkeit kleiner als ein Grenzwert, z.B. 1$\mu$m erfolgt ein Abbruch des kontinuierlichen Verfahrens und ein Übergang zu einem diskontinuierlichen Verfahren zur Bildaufnahme.
Das Gesichtsfeld des Mikroskopes wird durch eine in der Regel verwendete Zoomoptik eingestellt, der Zoomwert ist b im ersten Schritt V1.
a Lichtblatt ist die Lichtblattdicke unter Berücksichtigung des Zoomwertes b·
Die tatsächliche optische Schnittdicke d ergibt sich (zweiter Schritt V2) in Abhängigkeit von der PSF, dem verwendeten Objektiv, dem verwendeten Flüssigkeitsmedium in der Probekammer und anderen Einflüssen.
Durch die Vielzahl der Einflüsse auf die tatsächliche optische Schnittdicke wird diese anhand einer Kalibierdatei für verschiedene Objektive, Flüssigkeiten und andere variable Größen vorher erfasst und dann abgelesen / eingegeben.
Weiterhin wird auch (3. Schritt V3) die verwendete Detektionswellenlänge XXX bei der Ermittlung der Schnittdicke berücksichtigt.
Die effektive optische Schnittdicke ist in der Regel kleiner gleich der Lichtblattdicke. Mittels einer "0ptimal" Einstellung durch den Anwender (Optimalknopf) wird das mögliche optimale Aufnahmeintervall bestimmt (Optimierungs- vorgang in V4).
Intervall $\geq 1/sf$ dSystem
ist hier eine Bedingung für die Software. Der User hat die Möglichkeit beliebige Intervalle einzustellen, aber nie kleiner als 1/sf dSystem. Diese Grenze wird durch die verwendeten Kameras und Belichtungszeit vorgegeben. Zusätzlich stimmt bei zu kleinen Intervallen die Zuordnung der z-Koordinaten zum entsprechenden Kamerabild nicht mehr.
Hier wird zusätzlich mit sf in der Regel zwischen zwei erfolgten Aufnahmen ein Überlapp (z.B. 50%) durch den Anwender eingestellt um anhand der Objektstruktur eine vollständige Überdeckung bei der Erstellung eines vollständigen z-Stapels aus den Einzelaufnahmen zu erstellen.

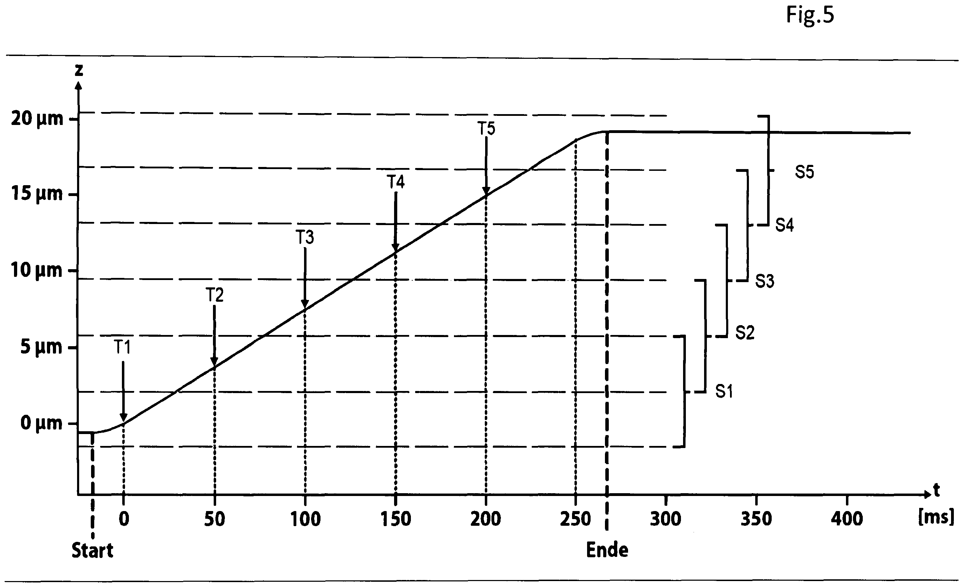

In Fig. 5 ist für die einzelnen Aufnahmepunkte T1-T5 jeweils ein Überlappbereich um 50 % mit S1-S5 dargestellt, mit dem die N Einzelaufnahmen stattfinden.

Dargestellt ist jeweils der Überlappbereich einer Einzelaufnahme zum genauen Zeitpunkt T1-T5, die Überlappbereiche der N Einzelaufnahmen innerhalb der Schärfentiefe sehen entsprechend aus.

N ist die Zahl der Bilder die in einer Tiefenschärfe des Objektives aufgenommen werden.

Bezogen auf die Darstellung heißt das dass pro T1, T2 jeweils N Bilder aufgenommen werden sollen.

Sf ist der Sampling Faktor (der Überlappbereich), also bei 50 % = 2
Das ist in V5 erfasst wo die erforderliche Verfahrgeschwindigkeit v aus den Vorgaben und ermittelten Werten ermittelt wird..

Bei kontinuierlicher Bewegung unter 1 Mikrometer ist kein reproduzierbarer Vorschub mehr realisierbar (u.a. wegen Reibungs- und anderen Verlusten)
Mit anderen Technologien (z.B. Piezo Motoren) könnten zwar kleinere Verfahrgeschwindigkeiten realisiert werden, es gibt aber immer eine untere Grenze. Die resultierende Verfahrgeschwindigkeit sollte also (s.o.) beispielsweise oberhalb 1 Mikrometer liegen um einen kontinuierlichen Vorschub zu ermöglichen.

Ansonsten wird eine diskrete Bildaufnahme vorgezogen und eingestellt. (Schritt V6)

**Patentansprüche**

1. Verfahren zur SPIM Mikroskopie mit einem Mikroskop, bestehend aus

   - einer Beleuchtungseinrichtung, umfassend eine Beleuchtungslichtquelle (3) und einen Beleuchtungsstrahlengang zur Beleuchtung der Probe (1) mit einem Lichtblatt,
   - einer Detektierungseinrichtung zur Detektierung von Licht, das von der Probe (1) abgestrahlt wird, mit einem Objektiv
   - wobei das Lichtblatt im Fokus des Objektives oder einer definierten Ebene in der Nähe des Fokus des Abbildungsobjektivs im Wesentlichen eben ist und das Objektiv eine optische Achse aufweist, die die Ebene des Lichtblattes in einem von Null verschiedenen Winkel, bevorzugt senkrecht schneidet,
   - wobei die Probe zur Erfassung unterschiedlicher Probeneben durch das Lichtblatt in Richtung der optischen Achse des Objektives verschoben wird

   **dadurch gekennzeichnet, dass** die Probe kontinuierlich mit vorzugsweise konstanter Geschwindigkeit durch das Lichtblatt verfahren wird und mittels der Detektierungseinrichtung während des Verfahrens mehrere Bilder in zeitlichen, vorzugsweise periodischen Abständen aufgenommen werden, wobei die durch das Verfahren der Probe erzeugte Verzerrung der Punktabbildungsfunktion (PSF), die Bildunschärfe, mittels der jeweiligen Bildaufnahmedauer und der Verfahrgeschwindigkeit rechnerisch korrigiert wird und vorzugsweise dadurch ein scharfes Bild erzeugt wird.

2. Verfahren nach Anspruch 1, mit einer vorzugsweise mit Flüssigkeit gefüllten Probenkammer die in Beleuchtungsrichtung und in Detektionsrichtung mindestens ein lichtdurchlässiges Fenster aufweist,

3. Verfahren nach Anspruch 1 oder 2,
   wobei die Bildaufnahmedauer oder Belichtungszeit so bemessen ist dass der Verfahrweg der Probe innerhalb eines vorgegebenen Auflösungsbereiches des Detektionsdetektives liegt.

4. Verfahren nach Anspruch1, 2 oder 3,
   wobei die die Geschwindigkeit des Verfahrens der Probe durch die verwendete Bildaufnahmedauer oder Belichtungszeit ermittelt und eingestellt wird.

5. Verfahren zur Bestimmung der Verfahrgeschwindigkeit der Probe in einem SPIM Mikroskop,
   wobei die Probe kontinuierlich mit vorzugsweise konstanter Geschwindigkeit durch das Lichtblatt verfahren wird und mittels einer Detektierungseinrichtung während des Verfahrens mehrere Bilder in zeitlichen, vorzugsweise periodischen Abständen aufgenommen werden,
   **dadurch gekennzeichnet, dass**
   aus der Lichtblattdicke, vorzugsweise unter Berücksichtigung der verwendeten Beleuchtungswellenlänge, die tatsächliche optische Schnittdicke des Lichtblattes, vorzugsweise unter Berücksichtigung der optischen Eigenschaften des verwendeten Detektionsobjektives, ermittelt wird und daraus und aus Benutzervorgaben wie der Häufigkeit der Bildaufnahme und/ oder des Überlappungsgrades von Bildaufnahmen in Richtung der Detektionsachse und/ oder weiterer Benutzervorgaben von Einzelbelichtungen die Verfahrgeschwindigkeit ermittelt wird, wobei die durch das Verfahren der Probe erzeugte Verzerrung der Punktabbildungsfunktion (PSF), die Bildunschärfe, mittels der jeweiligen Bildaufnahmedauer und der Verfahrgeschwindigkeit rechnerisch korrigiert wird und dadurch ein scharfes Bild erzeugt wird.

6. Verfahren nach Anspruch 5, wobei anhand eines Abbruchkriteriums für die Verfahrgeschwindigkeit ein Wechsel von kontinuierlichem zu diskontinuierlichem Verfahren der Probe erfolgt.

7. SPIM Mikroskop und/ oder Computer und/ oder Computerprogramm zur Durchführung des Verfahrens nach einem der vorangehenden Ansprüche.

Fig.1

Fig. 2

Fig.3

# Verfahrensablaufplan

Fig.4a

$$a_{Lichtblatt} = b^{\alpha 2} \cdot \alpha_1$$

V1

## Bestimmung der optischen Schnittdicke

Vergleich $a_{Lichtblatt}$

mit Kalibrierdatei ergibt $d_{System,500nm}$

V2

Berücksichtigung der Detektionswellenlänge
Bei der Ermittlung der Schnittdicke

$$\frac{\lambda o,Det,min}{0,5\mu m} \cdot d_{System,500nm} = d_{system}$$

V3

EP 3 470 906 A2

Fig. 4b

Optimierungsvorgang /
Optimierungsknopf

intervall = $1/^{sf} d_{System}$

intervall $\geq 1/sf\,dSystem$

V4

$$V = \frac{1}{N} fps \frac{1}{sf} d_{system}$$

Verfahrgeschwindigkeit

V5

Bei Verfahrgeschwindigkeit kleiner 1μm :
Abbruch kontinuierliches Verfahren
- diskontinuierliches Verfahren

V6

Fig.5

EP 3 470 906 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257423 A1

- WO 20040530558 A1

**In der Beschreibung aufgeführte Nicht-Patentliteratur**

- **STELZER et al.** *Optics Letters,* 2006, vol. 31, 1477
- **STELZER et al.** *Science,* 2004, vol. 305, 1007

- **HUISKEN ; STEINIER.** *Development,* 2009, vol. 136, 1963-1975